# EUROPÄISCHE PATENTSCHRIFT

(11) **EP 2 339 190 B1**
(45) Veröffentlichungstag und Bekanntmachung des Hinweises auf die Patenterteilung: **04.06.2014**
(21) Anmeldenummer: 10014662.0
(22) Anmeldetag: 16.11.2010
(51) Int. Cl.: F16B 41/00

(54) **Verfahren zur unverlierbaren Montage einer Schraube**
Method for undetachable fixing of a screw
Procédé pour le montage inamovible d'une vis

(30) Priorität: 22.12.2009 DE 102009060060
(43) Veröffentlichungstag der Anmeldung: 29.06.2011
(73) Patentinhaber: Rohde & Schwarz GmbH & Co. KG, 81671 München (DE)
(72) Erfinder: Steinmaier, Johann, 84478 Waldkraiburg (DE); Bogner, Winfried, 85764 Oberschleißheim (DE)
(74) Vertreter: Körfer, Thomas

(56) Entgegenhaltungen:
- DE-A1-102005 045 316
- FR-A- 875 342
- US-A- 2 672 069
- US-A- 5 750 936

## Beschreibung

Die Erfindung bezieht sich auf ein Verfahren zur unverlierbaren Montage einer Schraube an einem Werkstück, insbesondere einer Leiterplatte.

Um eine Schraube unverlierbar in einem Werkstück zu halten, ohne das Gewinde der Schraube in ein Gegengewinde einzudrehen, wird bislang beispielsweise eine Hülse, die mit einem Schraubenkopf fest verbunden ist in das Werkstück eingepresst oder eingenietet. Im Schraubenkopf ist eine Schraube integriert und drehbar sowie axial beweglich gelagert, so dass die Schraube auch im nicht im Gegengewinde eingedrehten Zustand fest mit dem Schraubenkopf und dem Werkstück verbunden ist. Durch Drehen der Schraube im Schraubenkopf wird die Schraube in das Gegengewinde eingeschraubt. Diese handelsüblichen unverlierbaren Schrauben weisen eine große Einbauhöhe auf. Unverlierbare Schrauben mit einem Durchmesser von 3 mm ragen typischerweise 1 bis 3 cm über das Werkstück hinaus. Dies erfordert ein großes Einbauvolumen und ist mit einem hohen Kostenaufwand verbunden.

Die DE 10 2005 045 316 A1 beschreibt eine platzsparende Anordnung zum Festhalten eines unverlierbaren Verbindungselements an einem Werkstück. Dabei durchgreift ein Verbindungselement, wie z. B. eine Schraube, ein Verformungsbauteil, das einen Körper in Form einer gehärteten ringförmigen Unterlagscheibe mit einer Klemmfläche besitzt. Die zum Werkstück zeigende Klemmfläche des Verformungsbauteils besitzt mindestens ein keilartiges Verformungselement, das radial und axial nach außen gewinkelt ist. Beim Eindrehen der Schraube wird das Verformungselement und damit die Klemmfläche gegen einen schmiedbaren bzw. kalt verformbaren Randabschnitt einer Öffnung im Werkstück gepresst, so dass das keilartige Verformungselement zumindest einen Abschnitt des Randes an der Verbindungselementöffnung verformt. Dabei wird der Durchmesser der Verbindungselementöffnung reduziert, sodass ein Anschlag erzeugt wird. Der wirkt dahingehend, einen Schaftabschnitt eines Verbindungselements innerhalb der Verbindungselementöffnung mechanisch festzuhalten bzw. zu sichern. Das Verbindungselement ist eine Schraube mit einem Schraubenkopf, einem daran anschließenden Schaft ohne Gewinde sowie einem daran anschließenden Gewindeteil. Somit so wird der Durchmesser der Verbindungselementöffnung durch das eingepresste Verformungsbauteil auf einen Wert der kleiner als der Durchmesser des Gewindebereichs der Schraube ist, reduziert. Die Schraube kann nicht mehr aus der Verbindungselementöffnung herausfallen.

Der Nachteil dieser Anordnung besteht darin, dass das Werkstück zumindest im Bereich der Verbindungselementöffnung aus einem schmiedbaren bzw. kalt verformbaren Material bestehen muss. Zudem wirkt beim Eindrehen des Verformungsbauteils eine hohe Druckbelastung auf das Werkstück, was zu Verformungen bzw. Beschädigungen des Werkstücks führen kann. Insbesondere beim Montieren dieser unverlierbaren Schraube auf eine Leiterplatte führt die Druckbelastung zu Veränderungen in der Leiterstruktur, so dass keine Leiterbahnen in näherer Umgebung der Verbindungselementöffnung geführt werden können.

Die US 5 750 936 A beschreibt eine Halterungsvorrichtung zur Befestigung einer gedruckten Leiterplatte an einem Halter. Die Halterungsvorrichtung umfasst eine Beilagscheibe die an ihrem inneren Durchmesser nach innen ragende Nasen aufweist, die ausreichend biegsam ausgeführt sind, so dass sie zumindest nach einer ersten Deformierung in ihre Ausgangsform, zurückkehren. Die Halterungsvorrichtung umfasst des Weiteren ein Befestigungselement mit einem ersten Endbereich, dessen Durchmesser kleiner als der innere Durchmesser der Beilagscheibe, aber größer als die lichte Weite zwischen den Nasen ist. Das andere Ende des Befestigungselements weist einen Durchmesser auf, der größer als der Innendurchmesser der Beilagscheibe ist. Der Bereich zwischen den beiden Endbereichen besitzt einen Durchmesser, der kleiner als die lichte Weite zwischen den Nasen der Beilagscheibe ist. Zur Befestigung der gedruckten Leiterplatte an einem Halter wird die Beilagscheibe an der gedruckten Leiterplatte befestigt und das Haltelement wird gegen den Widerstand der nachgiebigen Nasen in die Beilagscheibe eingebracht. Die nachgiebigen Nasen biegen sich nahezu in ihre Ausgangsposition zurück und halten somit das Halterungselement unverlierbar an der Leiterplatte fest.

Die Aufgabe der vorliegenden Erfindung ist es somit, ein Verfahren für eine platzsparende, kostengünstige und einfach zu montierende Halterung zur unverlierbaren Montage von Schrauben zu schaffen, die ohne Druckeinwirkung an einem Werkstück angebracht werden können.

Die Aufgabe wird durch das erfindungsgemäße Verfahren gemäß Anspruch 1 gelöst. In den Unteransprüchen sind vorteilhafte Weiterbildungen des erfindungsgemäßen Halteelements dargestellt.

Das erfindungsgemäße Halteelemente zur unverlierbaren Montage einer Schraube an einem Werkstück besitzt eine scheibenartige Form und eine Ausnehmung mit einer Innenkontur, wobei die Innenkontur mindestens eine in radiale Richtung nach innen weisende Nasen aufweist, in die ein Gewinde der Schraube eingreift. Vorteilhafter Weise kann eine beliebige, handelsübliche Schraube in das erfindungsgemäße Halteelement eingeschraubt werden und z. B. in dieser Weise vormontiert werden. Andererseits kann das Halteelement alleine erst über eine Öffnung in dem Werkstück fixiert werden und in einem zweiten Montageschritt die Schraube eingedreht und damit unverlierbar am Werkstück gehalten werden. Dies ermöglicht eine automatische Bestückung des Werkstücks und senkt somit die Montagekosten, insbesondere wenn es sich bei dem Werkstück um eine Leiterplatte handelt.

Vorteilhafterweise ist die lichte Weite zwischen den Nasen der Innenkontur kleiner als der Außendurchmesser des Schraubengewindes und größer als ein Kerndurchmesser bzw. Innendurchmesser der Schraube. Die Nenndicke des Halteelements ist kleiner als die Steigung des Schraubengewindes. Somit greift das Gewinde der Schraube in die Nasen der Innenkontur des Halteelements ein, ohne eine nennenswerte Krafteinwirkung auf das Halteelement oder das damit verbundene Werkstück auszuüben. Schrauben, die zwischen Schraubenkopf und Gewinde einen gewindefreien Bereich aufweisen, können sich nach dem Durchdrehen des Gewindeteils durch das Halteelement im gewindefreien Bereich der Schrauben nach allen Seiten eingeschränkt bewegt. Die Schraube wird im Bereich zwischen Schraubenkopf und Gewinde gehalten.

Das Halteelement weist vorteilhafter Weise eine lötfähige Oberfläche auf. Eine lötfähig beschichtete Platine bzw. Leiterplatte kann mit solchen Halteelementen automatisch bestückt und verlötet werden. Dabei ergibt sich eine gut leitende Verbindung, die als Massekontakt dienen kann. Somit ist eine einfache und kostengünstige automatische Montage der Halteelemente gewährleistet und die Schrauben müssen lediglich in die vorbestückten Halteelemente eingeschraubt werden. In dieser Weise vormontierte Leiterplatten können beliebig transportiert oder gelagert werden, ohne die Schrauben zu verlieren.

Die mindestens eine Nase der Innenkontur kann eckig oder auch rund ausgeformt sein. Besonders vorteilhaft weist das Halteelement drei bis fünf Nasen auf. In einem Halteelemente mit mindestens drei Nasen kann die einzudrehende Schraube einfach zentriert werden und bietet auch größeren Schraubendurchmessern ausreichend Halt.

Ausführungsbeispiele des erfindungsgemäßen Halteelementes sind in der Zeichnung beispielhaft dargestellt und werden anhand der nachfolgenden Beschreibung näher erläutert. Es zeigen:
- Fig. 1a-c: ein erstes, zweites und drittes Ausführungsbeispiel eines erfindungsgemäßen Halteelementes in Draufsicht;
- Fig. 2: das erste Ausführungsbeispiel eines erfindungsgemäßen Halteelements in Seitenansicht mit Blickrichtung A;
- Fig. 3: eine Schraube, die typischerweise mit einem erfindungsgemäßen Halteelement verbindbar ist;
- Fig. 4: ein erfindungsgemäßes Halteelement eingedreht in ein Gewinde in Detailansicht und
- Fig. 5: ein erfindungsgemäßes Halteelement mit Schraube montiert an einem Werkstück.

Einander entsprechende Teile sind in allen Figuren mit den gleichen Bezugszeichen versehen.

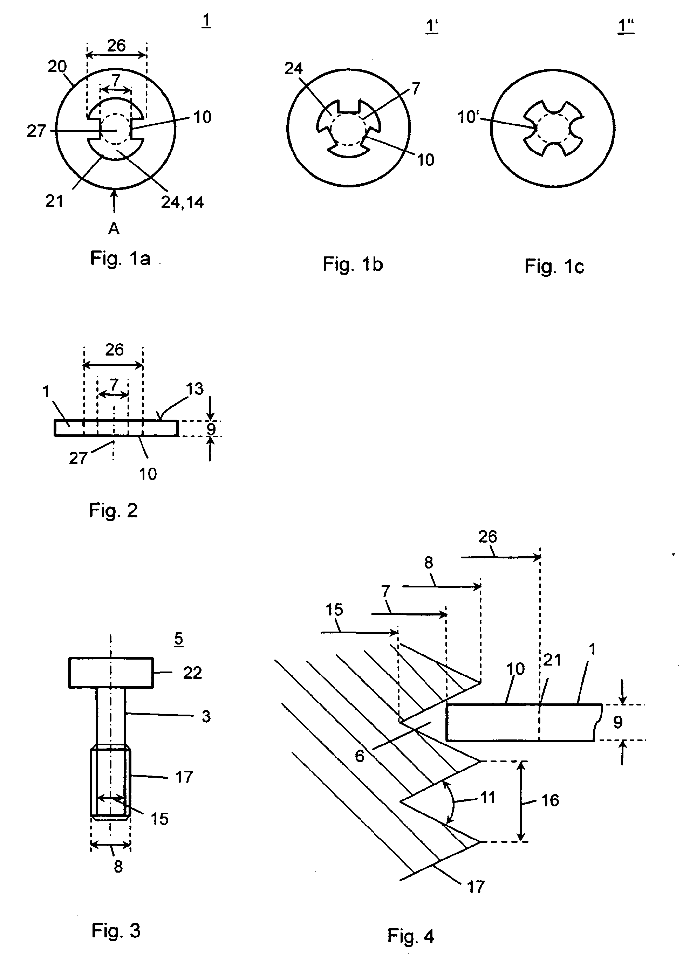

Fig. 1a zeigt ein erstes Ausführungsbeispiel eines erfindungsgemäßen Halteelements. Das Halteelement weist in dieser Ausführungsform eine kreisförmige Außenkontur 20 sowie eine zentrale Ausnehmung 14 auf. Die Innenkontur 21 der zentralen Ausnehmung 14 weist zwei eckige Nasen 10 auf, die in radiale Richtung auf die Mitte 27 der Ausnehmung 14 zeigen und die durch die lichte Weite 7 voneinander beabstandet sind. Die Innenkontur 21 hat eine maximale Weite 6, die größer ist als die lichte Weite 7 zwischen den Nasen 10 und ebenfalls größer als der Außendurchmesser 8 des Gewindes 8 der zu haltenden Schraube 5 ist.

Fig. 1b zeigt ein zweites Ausführungsbeispiel des Halteelements 1' mit drei eckigen Nasen 10. Fig. 1c stellt ein drittes Ausführungsbeispiel eines Halteelementes 1" mit nun vier rund ausgeformten Nasen 10' dar. Die Nasen 10, 10' liegen in der Ebene des Halteelements und sind radial nach innen auf die Mitte 25 der Ausnehmung 24 des Halteelements 5 gerichtet.

Fig. 2 zeigt ein Ausführungsbeispiel des Halteelements 1 in Seitenansicht mit Blick in Pfeilrichtung A. Das Halteelement 1 weist eine flache Scheibenform mit einer Dicke 9 auf. Die Oberfläche 13 des Haltelements ist flach und mindestens an der dem Werkstück zugewandten Seite mit einem lötfähigem Material, ggf. in Form einer geeigneten Oberflächenbeschichtung, z. B. aus Zinn, versehen. Um einen guten Kontakt mit dem Werkstück 2 zu gewährleisten, ist die Oberfläche 13 des Haltelements 5 eben ausgebildet.

In Fig. 3 ist eine typische Schraube 5 dargestellt, die mit dem Haltelement 1 zusammen unverlierbar an einem Werkstück 2 montiert werden soll. Die Schraube 5 weist einen Schraubenkopf 22 auf, an den ein gewindeloser Bereich 3 anschließt. An den gewindelosen Bereich 3 schließt sich ein Bereich mit einem Gewinde 17 an, das einen Außendurchmesser 8 und einen Kerndurchmesser 15 aufweist.

In Fig. 4 ist nun eine Detailansicht des Schraubengewindes 17 eingedreht in das Haltelement 1 zu sehen. Das Gewinde 17 der Schraube hat einen Gewindegang 6 mit einer Steigung 16, einem Flankenwinkel 11 und einen Außendurchmesser 8. Die geeignete Nenndicke 9 des Halteelements 1 ist abhängig vom Flankenwinkel 11 und der Steigung 16 des Gewindes. In jedem Fall aber ist die Nenndicke 9 des Halteelements 1 kleiner als die Steigung 16 des Gewindes 17. Die lichte Weite 7 zwischen den Nasen 10 der Innenkontur 21 hat einen Wert kleiner als der Außendurchmesser 8 des Gewindes, aber größer als der Kerndurchmesser 15 der Schraube 5. Die lichte Weite 7 der Innenkontur 21 ist so bemessen, dass sich das Gewinde 17 der Schraube 5 ohne nennenswerten Kraftaufwand in das Halteelement 1 eindrehen lässt.

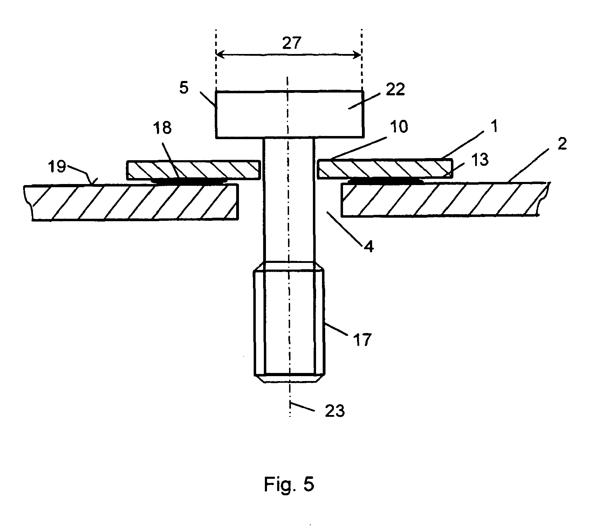

Fig. 5 zeigt eine Schraube 5, die unverlierbar durch das Halteelement 1 mit dem Werkstück 2, beispielsweise einer Leiterplatte verbunden ist. Das Halteelement 1 wird koaxial über die Achse 23 einer Bohrung 4 auf dem Werkstück 2 aufgeklebt und anschließend mit einem Lötmittel 18 aufgelötet. In die mindestens eine Nase 10 des Haltelements 1 wird nun eine handelsübliche Schraube 5 eingedreht. Nach dem Eindrehen des vollständigen Gewindes 17 durch das Haltelement 1 wird die Schraube 5 zwischen Schraubenkopf 5 und Gewinde 17 der Schraube 5 unverlierbar durch das Halteelement 1 gehalten. Die Unverlierbarkeit der Schraube 5 am Werkstück 2 ergibt sich aus der Differenz zwischen dem Gewindeaußendurchmesser 8 der Schraube 5 und der lichten Weite 7 des Halteelements 1, der Differenz zwischen Außendurchmesser 27 des Schraubenkopfes 22 und der lichten Weite 7 des Halteelements 1, sowie der festen Verbindung zwischen Haltelement 1 und Werkstück 2.

Durch den Freiraum 24, siehe Fig. 1a, in der Ausnehmung 14 kann das Gewinde 17 der Schraube 5 in das Haltelement 1 eingreifen, obwohl in das Haltelement 1 kein Gewinde eingebracht ist. Durch das fehlende Gewinde kann das Bauteil spanlos z. B. durch Lasern oder Stanzen gefertigt werden. Halteelemente 1 mit lötbarer Oberfläche 13 zur Bestückung von Platinen bestehen vorteilhafterweise aus Metall, insbesondere aus verzinntem Messing.

Das erfindungsgemäße Halteelement 5 kann automatisch montiert werden. Hierzu wird das Halteelement 5 bestückungsmaschinengerecht, z. B. gegurtet und mit Klebepunkten versehen, ausgeführt. Durch die geringe Nenndicke 9 des Halteelements 1 von typischerweise 0,2-0,3 mm wird eine geringe Bauhöhe erreicht und wenig Einbauraum benötigt.

Beim Eindrehen der Schraube 5 in das Haltelement 1 wirken nur geringe physikalische Kräfte auf das Halteelement 1 selbst und auch auf das Werkstück 2 ein. Somit besteht kaum eine Gefahr der Beschädigung des Werkstücks 2 oder des Halteelements 1 selbst. Eine auf diese Weise unverlierbar montierte Schraube eignet sich, insbesondere für Multilayer-Platinen, da die Laminierung der einzelnen Schichten bei der Montage von eingepressten unverlierbaren Schrauben leicht beschädigt wird. Durch die geringe Druckkraft auf die Platinenoberfläche bleiben die Leiterbahnen unbeschädigt und können auch dicht am Halteelement geführt sein. Die Außenkontur des Haltelements 1 kann nur wenig größer als die Bohrung 4 im Werkstück 2 gewählt werden, so dass Fläche für Leiterbahnen auf der Leiterplatte gewonnen werden kann.

Alle beschriebenen und/oder gezeichneten Merkmale können im Rahmen der Erfindung vorteilhaft miteinander kombiniert werden. Die Erfindung ist nicht auf die gezeigten Ausführungsbeispiele beschränkt. So kann z. B. die Außenkontur 20 des Haltelements 1 nicht nur rund, sondern auch rechteckig oder oval geformt sein.

## Patentansprüche

1. Verfahren zur unverlierbaren Montage einer Schraube (5) an einem Werkstück (2) mittels eines Halteelementes (1), wobei das Halteelement (1) eine scheibenartige Form aufweist und eine Ausnehmung (14) mit einer Innenkontur (21) besitzt, und die Innenkontur (21) mindestens eine in radiale Richtung nach innen weisende Nase (10) aufweist,
**dadurch gekennzeichnet,**
**dass** die Innenkontur (21) in einen Gewindegang der Schraube eingreift und die Schraube (5) in die mindestens eine Nase (10) des Halteelements (1) eingedreht wird.

2. Verfahren nach Anspruche 1,
**dadurch gekennzeichnet,**
**dass** die lichte Weite (7) zwischen der mindestens einen Nase (10) und der übrigen Innenkontur (21) des Halteelements (1) und/oder die lichte Weite (7) zwischen mindestens zwei Nasen (10) kleiner als der Außendurchmesser (8) des Schraubengewindes (17) und größer als der Kerndurchmesser (15) der Schraube (5) ist.

3. Verfahren nach Anspruch 1 oder 2,
**dadurch gekennzeichnet,**
**dass** eine Dicke des Halteelements (1) kleiner als die Steigung (16) des Schraubengewindes (17) ist.

4. Verfahren nach einem der Ansprüche 1 bis 3,
**dadurch gekennzeichnet,**
**dass** das Halteelement (1) eine lötfähige Oberfläche (13) aufweist.

5. Verfahren nach Anspruch 4,
**dadurch gekennzeichnet,**
**dass** das Halteelement (1) in der Umgebung einer Bohrung (4) des Werkstücks (2) aufgelötet wird.

6. Verfahren nach einem der Ansprüche 1 bis 5,
**dadurch gekennzeichnet,**
**dass** die mindestens eine Nase (10) eckig oder rund ausgeformt wird.

7. Verfahren nach einem der Ansprüche 1 bis 6,
**dadurch gekennzeichnet,**
**dass** die mindestens eine Nase (10) zum Zentrum der Ausnehmung (27) hin ausgerichtet wird.

8. Verfahren nach einem der Ansprüche 1 bis 7,
**dadurch gekennzeichnet,**
**dass** das Halteelement (1) drei bis fünf Nasen (10) aufweist.

9. Verfahren nach einem der Ansprüche 1 bis 8,
**dadurch gekennzeichnet,**
**dass** das Halteelement (1) aus einem lötfähigen Metall besteht und/oder eine verzinnte Oberfläche besitzt.

10. Verfahren nach einem der Ansprüche 1 bis 9,
**dadurch gekennzeichnet,**
**dass** das Halteelement (1) spanfrei durch Stanzen oder Laserschneiden hergestellt wird.

11. Verfahren nach einem der Ansprüche 1 bis 10,
**dadurch gekennzeichnet,**
**dass** das Werkstück (2) eine lötfähig beschichtete Leiterplatte ist.

## Claims

1. Method for captive fitment of a screw (5) to a workpiece (2) by means of a retaining element (1), wherein the retaining element (1) has a disk-like form and has a cut-out (14) with an internal contour (21), and the internal contour (21) exhibits at least one projection (10) pointing inwards in a radial direction,
**characterised in that**
the internal contour (21) engages in a thread turn of the screw and the screw (5) is screwed into the at least one projection (10) of the retaining element (1).

2. Method according to claim 1,
**characterised in that**
the clearance (7) between the at least one projection (10) and the remaining internal contour (21) of the retaining element (1) and/or the clearance (7) between at least two projections (10) is less than the outside diameter (8) of the screw thread (17) and more than the body diameter (15) of the screw (5).

3. Method according to claim 1 or 2,
**characterised in that**
a thickness of the retaining element (1) is less than the pitch (16) of the screw thread (17).

4. Method according to one of claims 1 to 3,
**characterised in that**
the retaining element (1) exhibits a surface (13) which can be soldered.

5. Method according to claim 4,
**characterised in that**
the retaining element (1) is soldered on in the vicinity of a drilling (4) of the workpiece (2).

6. Method according to one of claims 1 to 5,
**characterised in that**
the at least one projection (10) is angular or round in shape.

7. Method according to one of claims 1 to 6,
**characterised in that**
the at least one projection (10) is aligned with the centre of the cut-out (27).

8. Method according to one of claims 1 to 7,
**characterised in that**
the retaining element (1) exhibits three to five projections (10).

9. Method according to one of claims 1 to 8,
**characterised in that**
the retaining element (1) is made of a metal which can be soldered and/or has a tinned surface.

10. Method according to one of claims 1 to 9,
**characterised in that**
the retaining element (1) is manufactured without producing chips by punching or laser cutting.

11. Method according to one of claims 1 to 10,
**characterised in that**
the workpiece (2) is a circuit board which is coated so that it can be soldered.

## Revendications

1. Procédé de montage inamovible d'une vis (5) sur une pièce à usiner (2) au moyen d'un élément de retenue (1), dans lequel l'élément de retenue (1) présente une forme de disque et possède un évidement (14) à contour interne (21), et le contour interne (21) présente au moins un bec (10) dirigé vers l'intérieur dans une direction radiale,
**caractérisé en ce que**,
le contour interne (21) pénètre dans un pas de filetage de la vis et la vis (5) est engagée dans le au moins un bec (10) de l'élément de retenue (1).

2. Procédé selon la revendication 1, **caractérisé en ce que**
le diamètre intérieur (7) entre le au moins un bec (10) et le contour interne restant (21) de l'élément de retenue (1) et/ou le diamètre interne (7) entre au moins deux becs (10) est plus petit que le diamètre externe (8) du filetage de vis (17) et plus grand que le diamètre de noyau (15) de la vis (5).

3. Procédé selon la revendication 1 ou 2, **caractérisé en ce que**
une épaisseur de l'élément de retenue (1) est plus petite que l'inclinaison (16) du filetage de vis (17).

4. Procédé selon l'une des revendications 1 à 3, **caractérisé en ce que**
l'élément de retenue (1) présente une surface pouvant être soudée (13).

5. Procédé selon la revendication 4, **caractérisé en ce que** l'élément de retenue (1) est soudé à proximité d'un alésage (4) de la pièce à usiner (2).

6. Procédé selon l'une des revendications 1 à 5, **caractérisé en ce que**
le au moins un bec (10) est de forme rectangulaire ou ronde.

7. Procédé selon l'une des revendications 1 à 6, **caractérisé en ce que**
le au moins un bec (10) est dirigé vers le centre de l'évidement (27).

8. Procédé selon l'une des revendications 1 à 7, **caractérisé en ce que**
l'élément de retenue (1) présente trois à cinq becs (10).

9. Procédé selon l'une des revendications 1 à 8, **caractérisé en ce que**
l'élément de retenue (1) est constitué d'un métal pouvant être soudé et/ou présente une surface étamée.

10. Procédé selon l'une des revendications 1 à 9, **caractérisé en ce que**
l'élément de retenue (1) est fabriqué sans copeaux par estampage ou par découpe au laser.

11. Procédé selon l'une des revendications 1 à 10, **caractérisé en ce que**
la pièce à usiner (2) est une carte de circuit imprimé revêtue pouvant être soudée.
